Europäisches Patentamt

European Patent Office

Office européen des brevets

(19)

(11) EP 1 422 859 A2

(12) **EUROPEAN PATENT APPLICATION**

(43) Date of publication:
26.05.2004 Bulletin 2004/22

(51) Int Cl.7: **H04L 1/00**

(21) Application number: 03257199.4

(22) Date of filing: 14.11.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.11.2002 SG 200206994**

(71) Applicants:
• **Agency for Science, Technology and Research**
  **Singapore 138668 (SG)**
• **STMicroelectronics Asia Pacific Pte Ltd.**
  **Singapore 569508 (SG)**

(72) Inventors:
• **Aldridge, Chris**
  **Singapore 538805 (SG)**
• **Tan, Wee Tiong**
  **Singapore 510193 (SG)**
• **Sun, Minying**
  **Singapore 600412 (SG)**

(74) Representative: **Harrison Goddard Foote**
**Belgrave Hall**
**Belgrave Street**
**Leeds LS2 8DD (GB)**

(54) **Method and apparatus for a transport format combination indicator (TFCI) decoder**

(57)     A TFCI decoder (600) in accordance with the present invention comprises a comparator (605), which is coupled to receive encoded TFCI codewords (110) at a first input (610). At a second input (645), the comparator (605) is coupled to a TFCI candidate codeword generator (625) that generates all the possible candidate TFCI codewords (647) from all possible corresponding unencoded TFCI source data. When an en- coded TFCI codeword (110) is received at the first input (610), the comparator (605) compares the TFCI code- word (110) with each of the possible candidate TFCI codewords (647) provided to the second input (645), and the corresponding TFCI source data (650) is iden- tified. Subsequently, the identified TFCI source data (650) is latched in a TFCI source data memory (640) by a latch signal (620) provided from an output (630) of the comparator (605).

*FIG. 6*

Printed by Jouve, 75001 PARIS (FR)

EP 1 422 859 A2

**Description**

Field of the Invention

The present invention relates to decoding an encoded TFCI codeword and more particularly to decoding an encoded TFCI codeword to determine corresponding TFCI source data from a predetermined number of possible encoded TFCI codewords using maximum likelihood detection criteria.

Background of the Invention

In accordance with the third generation partnership project (3GPP), Universal Mobile Telecommunication System Terrestrial Radio Access (UTRA) defines a Wideband-CDMA (W-CDMA) standard. Under UTRA's radio interface protocol there are three (3) layers, the Radio Resource Layer, the Link Layer and the Physical Layer. Information for different services such as voice, multimedia (as in video and audio) and messages are routed to the Physical Layer via the Link Layer in one or more transport channels. The Radio Resource Layer indicates to the Physical Layer the coding and formatting schemes to be employed as source data is prepared for the air interface. This coding and formatting information is termed the Transport Format Code Indicator (TFCI).

In the Physical Layer, each transport channel is coded onto one or more Combined Composite Transport Channels (CCTrCH). Thereafter, the CCTrCH's are combined onto the Dedicated Physical Data Channel (DPDCH) and subjected to a CDMA modulation scheme and transmitted to the air interface. Along with the DPDCH, there is a single Dedicated Physical Control Channel (DPCCH) that contains the TFCI source data encoded in a TFCI codeword, along with other important control parameters relevant for managing the radio link. At a receiver side, the DPDCH and DPCCH can be easily separated and the TFCI codeword isolated. The coding of the TFCI codeword and the format of the TFCI source data are pre-known by the receiver, and the TFCI codeword is decoded, such that the receiver can determine the formatting employed on the DPDCH and recover the Transport Channels from the CCTrCH, using the recovered TFCI source data.

Since the TFCI codeword conveys important TFCI source data pertaining to the formatting schemes of the combined transport channels, any error in decoding the TFCI codeword can lead to errors in reconstructing the source data at the receiver. Therefore, an optimum decoder is needed to guarantee the correct detection of TFCI information.

The TFCI source data comprises a data word, and the number of TFCI source data bits is variable, and can be 10 bits or two lots of 5 bits of source data in split mode operation. The TFCI source data is generated in the radio resource control (RRC) layer of the sender, chosen from a compiled list in the Link Layer and encoded to 32 bits by a channel coder in the Physical Layer to yield the TFCI codeword.

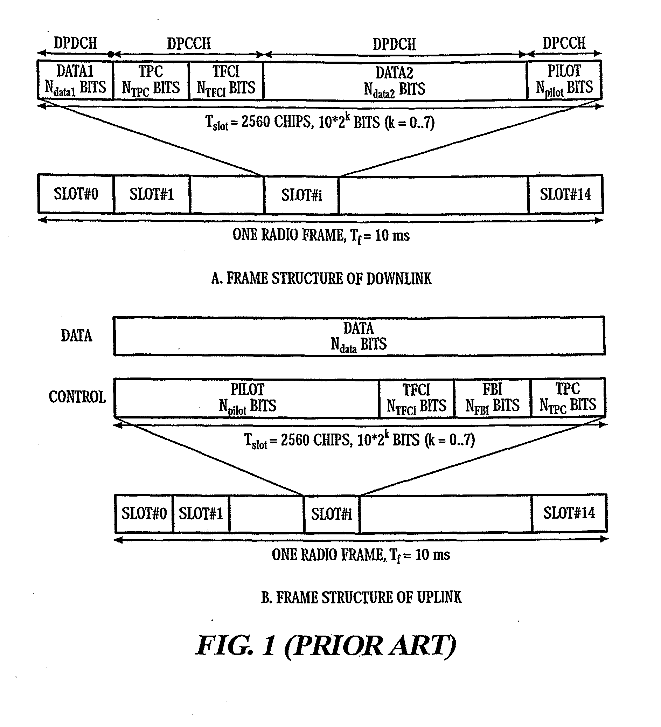

With reference of FIG. 1, each radio frame is composed of 15 time slots, each 0.667ms in duration. The 32-bit TFCI codeword is distributed into each timeslot. The TFCI encoding process uses a Reed-Muller channel-coding scheme, which is adopted by the 3GPP UTRA W-CDMA standard. Explicitly, in normal mode, the 10 TFCI source data bits are encoded using (32,10) sub-code of the second order Reed-Muller code, before transmission. In split mode operation, two lots of 5 TFCI source data bits are separately encoded using a (16,5) first-order Reed-Muller code.

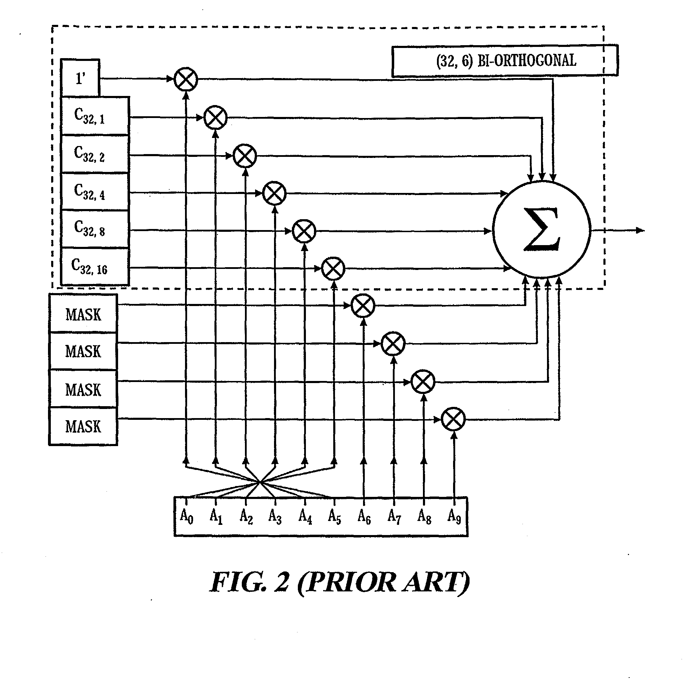

With reference to FIG. 2, a TFCI codeword (m,n) is generated by a linear combination of n sequences with each of m bits length. The codewords of a (32, 10) sub-code of a second order Reed-Muller code are a linear combination of 10 basis sequences of 32 bits each. The 10 sequences can be represented as ($C_{32,16}$, $C_{32,8}$, $C_{32,4}$, $C_{32,2}$, $C_{32,1}$, all 1's, $M_1$, $M_2$, $M_3$, $M_4$) which is shown in the following TABLE 1.

## TABLE 1 Basic sequence for (32,10)TFCI code

| | $C_{32,16}$ | $C_{32,8}$ | $C_{32,4}$ | $C_{32,2}$ | $C_{32,1}$ | 1's | $M_1$ | $M_2$ | $M_3$ | $M_4$ |
|----|----|----|----|----|----|----|----|----|----|----|
| 0 | 0 | 0 | 0 | 0 | 0 | 1 | 0 | 0 | 0 | 0 |
| 1 | 1 | 0 | 0 | 0 | 0 | 1 | 0 | 0 | 0 | 0 |
| 2 | 0 | 1 | 0 | 0 | 0 | 1 | 1 | 0 | 0 | 0 |
| 3 | 1 | 1 | 0 | 0 | 0 | 1 | 0 | 0 | 0 | 1 |
| 4 | 0 | 0 | 1 | 0 | 0 | 1 | 1 | 0 | 1 | 1 |
| 5 | 1 | 0 | 1 | 0 | 0 | 1 | 0 | 0 | 0 | 1 |
| 6 | 0 | 1 | 1 | 0 | 0 | 1 | 0 | 0 | 1 | 0 |
| 7 | 1 | 1 | 1 | 0 | 0 | 1 | 0 | 1 | 0 | 0 |
| 8 | 0 | 0 | 0 | 1 | 0 | 1 | 0 | 1 | 1 | 0 |
| 9 | 1 | 0 | 0 | 1 | 0 | 1 | 1 | 1 | 1 | 0 |
| 10 | 0 | 1 | 0 | 1 | 0 | 1 | 1 | 0 | 1 | 1 |
| 11 | 1 | 1 | 0 | 1 | 0 | 1 | 0 | 0 | 1 | 1 |
| 12 | 0 | 0 | 1 | 1 | 0 | 1 | 0 | 1 | 1 | 0 |
| 13 | 1 | 0 | 1 | 1 | 0 | 1 | 0 | 1 | 0 | 1 |
| 14 | 0 | 1 | 1 | 1 | 0 | 1 | 1 | 0 | 0 | 1 |
| 15 | 1 | 1 | 1 | 1 | 1 | 1 | 1 | 1 | 1 | 1 |
| 16 | 0 | 0 | 0 | 0 | 1 | 1 | 1 | 0 | 0 | 0 |
| 17 | 1 | 0 | 0 | 0 | 1 | 1 | 1 | 1 | 0 | 0 |
| 18 | 0 | 1 | 0 | 0 | 1 | 1 | 1 | 1 | 0 | 1 |
| 19 | 1 | 1 | 0 | 0 | 1 | 1 | 1 | 0 | 1 | 0 |
| 20 | 0 | 0 | 1 | 0 | 1 | 1 | 0 | 1 | 1 | 1 |
| 21 | 1 | 0 | 1 | 0 | 1 | 1 | 0 | 1 | 0 | 1 |
| 22 | 0 | 1 | 1 | 0 | 1 | 1 | 0 | 0 | 1 | 1 |
| 23 | 1 | 1 | 1 | 0 | 1 | 1 | 0 | 1 | 1 | 1 |
| 24 | 0 | 0 | 0 | 1 | 1 | 1 | 0 | 1 | 0 | 0 |
| 25 | 1 | 0 | 0 | 1 | 1 | 1 | 1 | 1 | 0 | 1 |
| 26 | 0 | 1 | 0 | 1 | 1 | 1 | 1 | 0 | 1 | 0 |
| 27 | 1 | 1 | 0 | 1 | 1 | 1 | 1 | 0 | 0 | 1 |
| 28 | 0 | 0 | 1 | 1 | 1 | 1 | 0 | 0 | 1 | 0 |
| 29 | 1 | 0 | 1 | 1 | 1 | 1 | 1 | 1 | 0 | 0 |
| 30 | 0 | 1 | 1 | 1 | 1 | 1 | 1 | 1 | 1 | 0 |
| 31 | 1 | 1 | 1 | 1 | 1 | 1 | 1 | 1 | 1 | 1 |

If the input TFCI source data bits are represented by A0, A1, A2,..., A9, the TFCI codeword after encoding is:

$$A_0{}^*C_{32,16} \oplus A_1{}^*C_{32,8} \oplus A_2{}^*C_{32,4} \oplus A_3{}^*C_{32,2} \oplus A_4{}^*C_{32,1} \oplus A_5 \oplus A_6{}^*M_1 \oplus A_7{}^*M_2 \oplus$$

$$A_8*M_3 \oplus A_9*M_4$$

Where $\oplus$ and $*$ are multiplications and additions in modulo 2 operation, $C_{32,j}$ denotes the jth code of layer 32 of Orthogonal Variable Spreading Code (OVSF); and $M_i$ denotes the ith mask sequence. In actual transmission, as specified by 3GPP standard, the 1st bit of the codeword is moved to the 31st bit and the 17th bit is moved to the 32nd bit.
In split mode operation, the codewords of (16,5) are a linear combination of five basic sequences, i.e. $C_{16,8}$, $C_{16,4}$, $C_{16,2}$ $C_{16,1}$, all 1's, where $C_{16,j}$ denotes the jth code of layer 16 of OVSF which is shown in TABLE 2.

### TABLE 2 Basic sequence for (16,5) TFCI code

| i | $C_{16,8}$ | $C_{16,4}$ | $C_{16,2}$ | $C_{16,1}$ | 1's |
|---|---|---|---|---|---|
| 0 | 1 | 0 | 0 | 0 | 1 |
| 1 | 0 | 1 | 0 | 0 | 1 |
| 2 | 1 | 1 | 0 | 0 | 1 |
| 3 | 0 | 0 | 1 | 0 | 1 |
| 4 | 1 | 0 | 1 | 0 | 1 |
| 5 | 0 | 1 | 1 | 0 | 1 |
| 6 | 1 | 1 | 1 | 0 | 1 |
| 7 | 0 | 0 | 0 | 1 | 1 |
| 8 | 1 | 0 | 0 | 1 | 1 |
| 9 | 0 | 1 | 0 | 1 | 1 |
| 10 | 1 | 1 | 0 | 1 | 1 |
| 11 | 0 | 0 | 1 | 1 | 1 |
| 12 | 1 | 0 | 1 | 1 | 1 |
| 13 | 0 | 1 | 1 | 1 | 1 |
| 14 | 1 | 1 | 1 | 1 | 1 |
| 15 | 0 | 0 | 0 | 0 | 1 |

The TFCI codeword after encoding is:

$$A_0*C_{16,8} \oplus A_1*C_{16,4} \oplus A_2*C_{16,2} \oplus A_3*C_{16,1} \oplus A_4$$

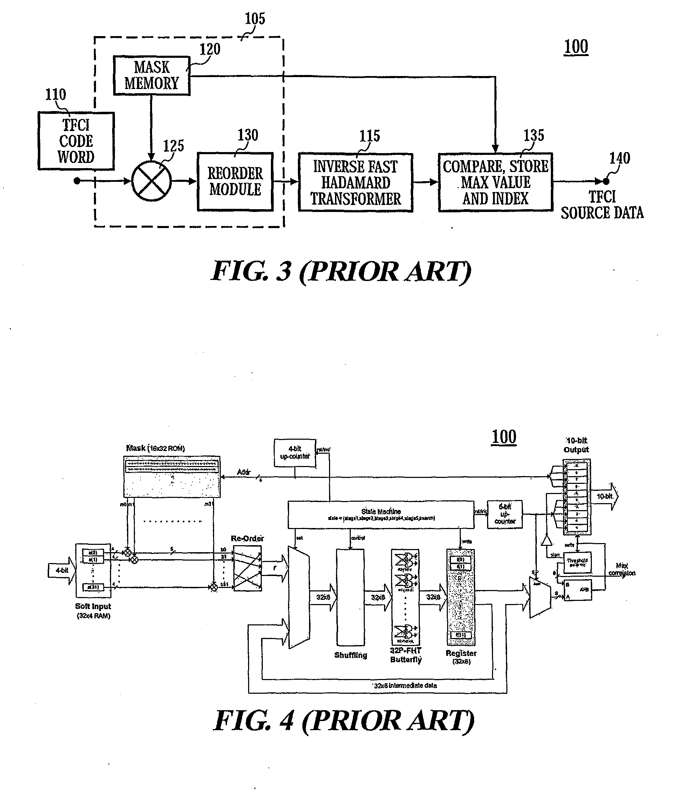

The resulting two 16-bit codewords are concatenated to a 32-bit codeword. At the receiver site, a maximum likelihood decoder is employed. Typically, the 32-bit TFCI codeword is decoded in two steps: masking the codeword by all possible combinations of the highest four bits; then performing Inverse Fast Hadamard Transform algorithm (IFHT] to decode first order Reed-Muller code.
With reference to FIG. 3, a functional block diagram of a prior art TFCI decoder 100 comprises a converter 105, which performs the masking of the received 32 symbols of the TFCI codeword 110 and provides a first order Reed-Muller coded word to subsequent inverse fast Hadamard transformer 115. The converter 105 comprises a mask memory 120 that provides a series of 16X32 bit masks from all combinations of $M_1 \sim M_4$ as shown in TABLE 1, each of which are applied to the received coded TFCI codeword 110 in a predetermined order by a multiplier 125. A reorder module 130 recovers the sequence order to a 1st. order Reed-Muller encoded TFCI codeword.
The inverse fast Hadamard transformer 115 receives the 1st. order Reed-Muller encoded TFCI codeword, and computes the fast Hadamard transform of sequences generated from the converter 105. This process iterates 16 times to process all the 16 combinations of masked sequences. The compare and store unit 135 selects the coordinate of a sequence which has the greatest magnitude and determines the bits A0 to A4 of the recovered TFCI source data. The bits A5 to A9 of the recovered TFCI source data are determined by the index of the mask sequence and sign bit of the stored magnitude.
With reference of FIG. 4, as will be appreciated by one skilled in the art, the inverse fast Hadamard transformer 115 is the most complicated part of the conventional TFCI decoder 100. In accordance with the fast Hadamard or the inverse fast Hadamard transform algorithm, the Hadamard matrix is decomposed into $\log_2 M$ matrices, such that the dot product (or correlation) of input vector and any column of decomposed matrices are a two-operand addition and subtraction operation, often referred to butterfly operators, where each butterfly operator comprises a binary adder and a binary subtractor.

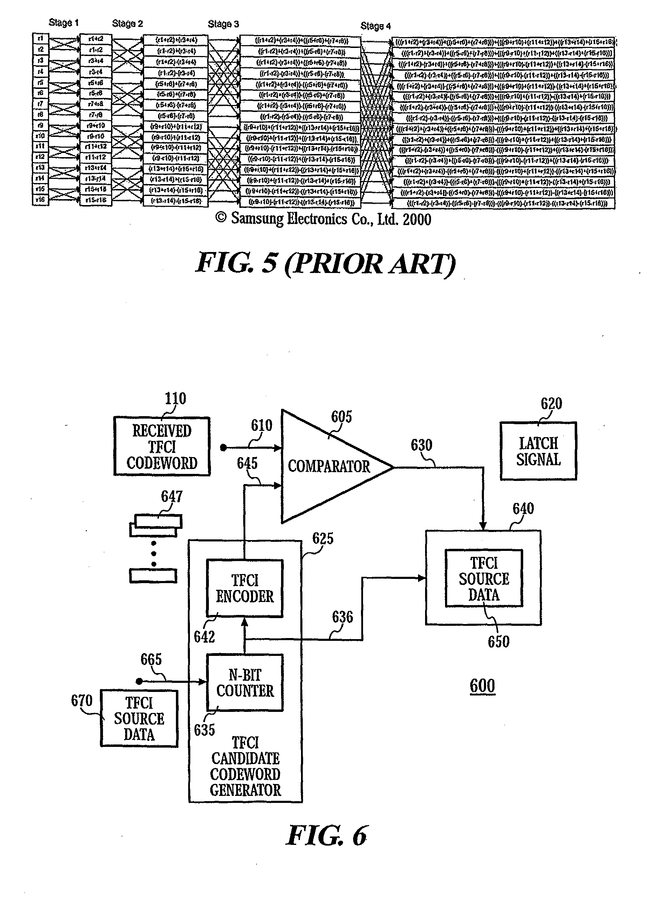

With reference to FIG. 5, a 16-point radix-2 inverse fast Hadamard transform includes four butterfly operation stages, as shown, and each stage corresponds to a decomposed matrix. In general, for an M-point inverse fast Hadamard transform, the number of addition/ subtraction operations per stage is M, and number of stages is $\log_2(M)$. Therefore, there would be a total of $M\log_2 M$ addition and subtraction operations in the inverse fast Hadamard transformer 115.

Although the conventional TFCI decoding algorithm is relatively fast in terms of processing procedure, a disadvantage is the relatively complex hardware implementation that is required to realize the inverse fast Hadamard transformer 115. One reason for this is the need for many butterfly operators or arithmetic units that operate in parallel, and also the need for a large shuffling network for data interchange between butterfly operators. Another disadvantage is the need for a finite state machine for controlling and synchronizing the data flow, where the finite state machine is realized by yet another complex logic block in the inverse fast Hadamard transformer 115. Consequently, the conventional decoder 100 that utilizes the inverse fast Hadamard transformer 115 is both memory and binary logic gate intensive.

Brief Summary of the Invention

The present invention seeks to provide a method and apparatus for a transport format combination indicator (TFCI) decoder, which overcomes or at least reduces the abovementioned problems of the prior art.

Accordingly, in one aspect, the present invention provides a decoder comprising:

a first input for receiving one of a plurality of encoded codewords, wherein the one of the plurality of encoded codewords corresponds with one of a plurality of source data words in accordance with a predetermined coding scheme;
a second input for receiving a plurality of candidate codewords, wherein the plurality of candidate codewords is generated by encoding the plurality of source data words in accordance with the predetermined coding scheme;
a comparator coupled to the first and second inputs, the comparator for comparing the one of the plurality of encoded codewords with at least some of the plurality of candidate codewords, and the comparator for producing a latch signal when the one of the plurality of encoded codewords is substantially similar to one of the plurality of candidate codewords, wherein the one of the plurality of candidate codewords is produced by the one of the plurality of source data words; and the comparator having an output coupled to provide the latch signal.

In another aspect the present invention provides a decoder comprising:

a first input for receiving one of a plurality of encoded codewords, wherein the one of the plurality of encoded codewords corresponds with one of a plurality of source data words in accordance with a predetermined coding scheme;
a second input for receiving at least some of a plurality of candidate codewords, wherein the at least some of the plurality of candidate codewords is generated by encoding at least some of the plurality of source data words in accordance with the predetermined coding scheme;
a comparator coupled to the first and second inputs, the comparator for comparing the one of the plurality of encoded codewords with the at least some of the plurality of candidate codewords, and the comparator for producing a sign bit and decoded data;
a post processor coupled to receive the sign bit and the decoded data, and the post processor for producing the one of the plurality of source data words; and
an output coupled to provide the one of the plurality of source data words.

In yet another aspect the present invention provides a method for decoding comprising the steps of:

a) receiving one of a plurality of encoded codewords, wherein the one of the plurality of encoded codewords corresponds with one of a plurality of source data words in accordance with a predetermined coding scheme;
b) generating a plurality of candidate codewords, wherein the plurality of candidate codewords is generated by encoding each of the plurality of source data words in accordance with the predetermined coding scheme;
c) comparing the one of the plurality of encoded codewords with each of the plurality of candidate codewords to determine a measure of similarity therebetween;

d) determining one of the plurality of candidate codewords has the greatest measure of similarity;

e) identifying the corresponding one of the plurality of source data words that produced the one of the plurality of candidate codewords in accordance with the predetermined coding scheme; and

f) providing the one of the plurality of source data words.

In still another aspect the present invention provides a method for decoding where a bi-orthogonal coding scheme is employed, the method comprising the steps of:

a) receiving one of a plurality of encoded codewords, wherein the one of the plurality of encoded codewords corresponds with one of a plurality of source data words in accordance with a predetermined coding scheme;

b) generating a plurality of candidate codewords, wherein the plurality of candidate codewords is generated by encoding at least some of a plurality of data words in accordance with the predetermined coding scheme;

c) comparing the one of the plurality of encoded codewords with the at least some of the plurality of candidate codewords to determine a measure of similarity therebetween, wherein the measure of similarity includes a bi-orthogonal state indicator;

d) determining one of the at least some of the plurality of candidate codewords has the greatest measure of similarity;

e) identifying the corresponding one of the plurality of data words that produced the one of the plurality of candidate codewords in accordance with the predetermined coding scheme;

f) determining the state of the bi-orthogonal state indicator;

g) when the bi-orthogonal state indicator has a first state, the corresponding one of the plurality of data words is provided as the one of the plurality of source data words; and

f) when the bi-orthogonal state indicator has a second state, a correlation offset value is added to the corresponding one of the plurality of data words, and the sum is provided as the one of the plurality of source data words.

Brief Description of the Drawings

An embodiment of the present invention will now be more fully described, by way of example, with reference to the drawings of which:

FIG. 1 shows data structure communicated on a DPCH of a W-CDMA communication system, as is known in the prior art;

FIG. 2 shows a prior art TFCI source data encoder;

FIG. 3 shows a functional block diagram of a prior art TFCI decoder;

FIG. 4 shows hardware architecture of the prior art decoder in FIG. 3;

FIG. 5 shows a graphical representation of a 16-point radix-2 inverse fast Hadamard transform employed by the prior art decoder in FIG. 3;

FIG. 6 shows a functional block diagram of a TFCI decoder in accordance with the present invention;

FIG. 7 shows a more detailed diagram of the TFCI decoder in FIG. 6;

FIG. 8 shows a flowchart detailing the operation of the TFCI decoder in FIG. 6;

FIG. 9 shows cross correlation property of the TFCI decoder in FIG. 6;

FIG. 10 shows relationship between index of maximum correlation metric and minimum correlation metric;

FIG. 11 shows a functional block diagram of a simplified TFCI decoder in accordance with the present invention; and

FIG. 12 shows a flowchart detailing the operation of the simplified TFCI decoder in FIG. 11.

Detail Description of the Drawings

A TFCI decoder, in accordance with the present invention comprises a comparator, which is coupled to receive TFCI codewords at a first input. At a second input, the comparator is coupled to a TFCI codeword generator that can generate all possible candidate TFCI codewords from all possible corresponding TFCI source data. When a TFCI codeword is received at the first input, the comparator successively compares the received TFCI codeword with each of the candidate TFCI codewords provided to the second input. When a match based upon the minimum Euclidean distance, or simply the maximum correlation metric, between the received and candidate codeword is determined, the candidate TFCI codeword that produced the best match against the received TFCI codeword is identified. Subsequently, the corresponding TFCI source data that produced the identified candidate TFCI codeword is provided at an output of the decoder.

In a target application of UTRA FDD, there are a maximum of 1024 candidate TFCI codewords, which corresponds to the TFCI source data having 10 bits. If the comparison of each candidate TFCI codeword takes one clock cycle, it would take 1024 clock cycles to identify the candidate TFCI codeword that produced the best match. For UTRA FDD the clock cycle would typically be based upon the chip rate at 3.84 MHz. Thus, the time taken to compare all the candidate TFCI codewords is 1024 x 1/3.84 MHz = 0.267 ms, which is less than the timeslot duration of 0.667 milliseconds in a frame.

There are 1024 candidate TFCI codewords because there are 10 source data bits. If there were 11 source data bits, then there would be 2048 candidate TFCI codewords to consider, and in general for N source data bits there would be 2 raised to the power of N (or $2^N$) candidate TFCI codewords to consider. For N >12, there would be 4096 candidate TFCI codewords, and using the 3.84 MHz clock rate, a time of 1.067 ms is necessary to cycle through all these candidate TFCI codewords. Thus, as N increases, the time taken to consider all candidate TFCI codewords increases exponentially, and this invention becomes less efficient in terms of decoding time. However, for UTRA FDD the TFCI sequence has an upper bound of 1024 candidate TFCI codewords, or N=10 or 10 TFCI source data bits.

With reference to FIG. 6 a TFCI decoder 600, in accordance with the present invention, comprises a comparator 605 having a first input 610 for receiving the TFCI codeword 110, and a second input 645 for receiving the candidate TFCI codewords 647 that are output from a TFCI candidate codeword generator 625. The comparator 605 has an output 630 that is coupled to a data latch 640, and the comparator 605 provides a latch signal 620 from the output 630 to the data latch 640, when the comparator 605 has found a matched codeword.

The TFCI candidate codeword generator 625 comprises an N-Bit counter 635 and a TFCI encoder 642. The N-Bit counter 635 sequentially steps through all the 2 raised to the power of N ($2^N$) possibilities, where N corresponds to the TFCI source data bits. The N-bit counter has an counter-setting input 665 for receiving predetermined TFCI source data 670. With this facility, the N-Bit counter 635 is not limited to count sequentially with each clock pulse, but can advantageously be set to whatever count, and hence whatever predetermined TFCI source data 670, that may be required with each clock pulse. At each step, the N-Bit counter 635 provides its contents, which represents each possible combination of TFCI source data bits, to the TFCI encoder 642. The TFCI encoder 642 encodes the TFCI source data, and presents the encoded source data to the comparator 605 at the input 645 as the candidate TFCI codewords 647.

The N-Bit counter 635 is also coupled to provide its contents to the data latch 640. When the latch signal 620 is received, the data latch 640 latches the contents of the N-Bit counter 635, and the latched data corresponds to the decoded TFCI source data 650.

For UTRA FDD, N would be equal to 5 in split mode and 10 for normal mode operation. In addition, the N-Bit counter 635 can also be configured by a candidate TFCI codeword list (not shown), which is provided by an upper layer. In addition, both the comparator 605 and the TFCI candidate codeword generator 625 have reset and clock inputs (not shown) to control their operation. The decoder 600 is designed to perform one comparison per clock cycle, and 2 raised to the power of N clock cycles would be necessary for each decode operation. Prior to decoding, the reset signal is applied to initialize the decoder 600.

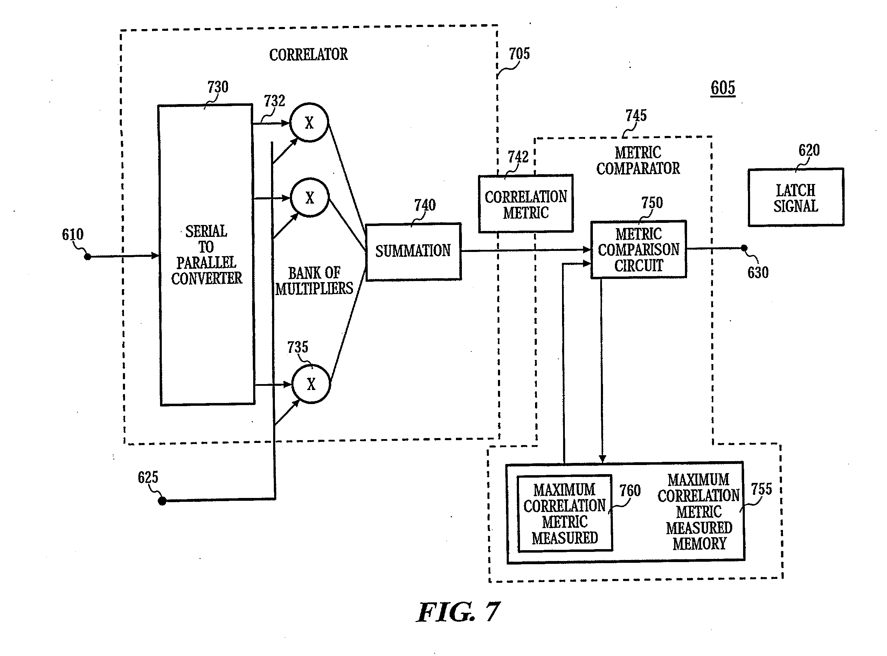

With reference to FIG. 7 the comparator 605 comprises a correlator 705 and a metric comparator 745. The correlator 705 comprises a serial-to-parallel data converter 730 that receives the TFCI codeword 110 in a serial format and converts this to a 32 symbol parallel format 732. At each output of the serial-to-parallel converter 730 there is an associated multiplier 735, thus there are 32 multipliers in total. One input of each of the multipliers 735 is from the serial-to-parallel converter 730, and the other input of each of the multipliers 735 is from the TFCI candidate codeword generator 625. The multiplication rule of each multiplier 735 is as follows: if the associated bit from the TFCI candidate codeword generator 625 is one (1), the multiplication is by one (1), if the associated bit from the TFCI candidate codeword generator 625 is zero (0) the multiplication is by minus one (-1). A summation module 740 coupled to the output of the 32 multipliers 735 then sums the outputs provided by the 32 multipliers 735, and provides a resultant correlation metric 742. The correlation metric 742 is indicative of the correlation between the TFCI codeword 110 at the input 610 of the comparator 605 and one of the candidate TFCI codewords 647 that is currently provided by the TFCI candidate codeword generator 625.

The metric comparator 745 comprises a metric comparison circuit 750 and a maximum correlation metric measured memory 755. One input of the metric comparison circuit 750 is coupled to receive the correlation metric 742, and a second input of the metric comparison circuit 750 is coupled to the maximum correlation metric measured memory 755. The metric comparison circuit 750 provides the latch signal 620 to the data latch 640 (in figure 6), when the correlation metric 742 is greater than the maximum correlation metric measured 760, in addition the correlation metric 742 is stored to the maximum correlation metric measured 760 in the maximum correlation metric measured memory 755 in the subsequent clock cycle. Prior to TFCI decoding, the maximum correlation metric measured 760 in the maximum correlation metric measured memory 755 is initialized to zero by the reset signal.

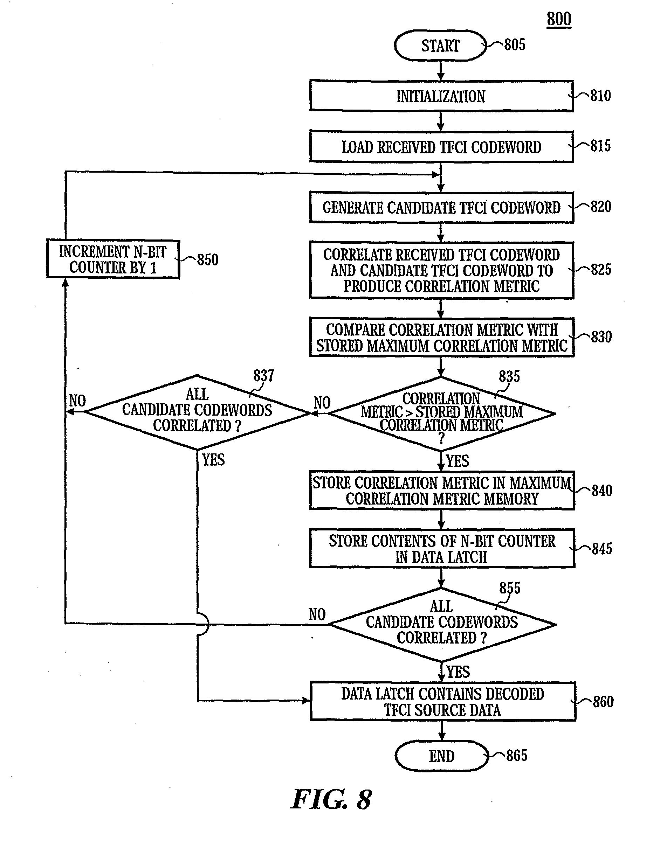

With reference to FIG. 8 the operation 800 of the TFCI decoder 600 starts from step 805 with initialization (step) 810 of the maximum correlation metric measured memory 755 and the N-Bit counter 635 to zero (0). The TFCI codeword 110 comprises 32 input symbols, and upon receipt at the input 610, are loaded (step) 815 into the serial-to-parallel converter 732. Next, in each clock cycle, one of the candidate TFCI codewords 647 is generated (step) 820.

Typically, one clock cycle is equal to one chip period as described earlier, and to generate each candidate TFCI codeword the contents from the N-Bit Counter 635 is encoded by the TFCI encoder 642 to produce one of the candidate TFCI codewords 647. Each candidate TFCI codeword consists of 32 bits labeled bit 0, bit 1, bit 2, through to bit 31, where each bit can have a value of zero (0) or one (1). A candidate TFCI codeword is then correlated (step) 825 against the received encoded TFCI codeword 110 by the correlator 705 according to the following equation:

$$\text{TFCI x bit 0} + \text{TFCI x bit 2} \ldots + \text{TFCI x bit 31 Correlation}$$

and produces the resultant correlation metric 742. The same rule applies for the multiplier 735 as mentioned previously: if the associated bit from the TFCI candidate codeword generator 625 is one (1), the multiplication is by one (1), if the associated bit from the TFCI candidate codeword generator 625 is zero (0) the multiplication is by minus one (-1). The correlation metric 742 is then compared (step) 830 with the maximum correlation metric measured 760, that is stored in the maximum correlation metric measured memory 755. If the correlation metric 742 is less than the maximum correlation metric measured 760, a further determination (step) 837 is made whether all the candidate TFCI codewords 647 have been correlated. When all the candidate TFCI codewords 647 have not been correlated, the N-bit counter 635 is incremented (step) 850 by one (1), and the operation 800 continues from step 820 as described earlier. Alternatively, when all the candidate TFCI codewords 647 have been correlated, the data latch 640 contains (step) 860 the decoded TFCI source data 650.

When at step 835, the correlation metric 742 is greater than the maximum correlation metric measured 760, the correlation metric 742 is stored (step) 840, by a latching operation, in the maximum correlation metric measured memory 755, and becomes the new maximum correlation metric measured 760. In addition, when the correlation metric 742 is greater than the maximum correlation metric measured 760, the metric comparison circuit 750 provides the latch signal 620 to the data latch 640, which latches or stores (step) 845 the current contents of the N-Bit counter 635 in the data latch 640 as the decoded TFCI source data 650. The latching of the correlation metric 742 in the maximum correlation metric measured memory 755, and the latching of the current contents of the N-bit counter 635 in the data latch 640, occurs at the end of the clock cycle.

A determination (step) 855 is then made whether all the 1024 candidate TFCI codewords 647 have been correlated, and when there remains candidate TFCI codewords that are not correlated, the N-bit counter 635 is incremented (step) 850 by one (1), and the operation 800 continues from step 820 as described earlier. In this way, all possible count values of the N-Bit counter 635 will be processed.

However, when it is determined (step) 855 that all the 1024 candidate TFCI codewords 647 have been correlated, the data latch 640 contains the most likely decoded TFCI source data 650, and the maximum correlation metric measured memory 755 contains the highest value. The operation 800 then ends (step) 865.

The current invention can be advantageously used as a means of soft decision decoding, as well as hard decision decoding. For example, by using 4 bits of soft decision decoding, the signal to noise ratio can be reduced by 2 dB in order to achieve the same bit error rate as the hard decision. The performance improvement is a trade-off against hardware complexity.

The current invention can advantageously be employed without the need for reordering which is mandatory for IFHT processing in the prior art. Moreover, the TFCI codeword loaded into the comparator can be the number of symbols after puncturing if puncturing is conducted at the transmission site, or the number of symbols after maximum ratio combination when repetition is performed at the transmitter site. For example, in a typical punctured code format (30, 10), only 30 bits of TFCI codeword are transmitted through the air and the TFCI encoder can then generate a 30-bit codeword by puncturing the 1st bit and 17th bit of the 32-bit sequences. Thereafter, the correlator has 30 multipliers working in parallel. To cater to all transmission cases, additional hardware is needed to switch on/off the multipliers.

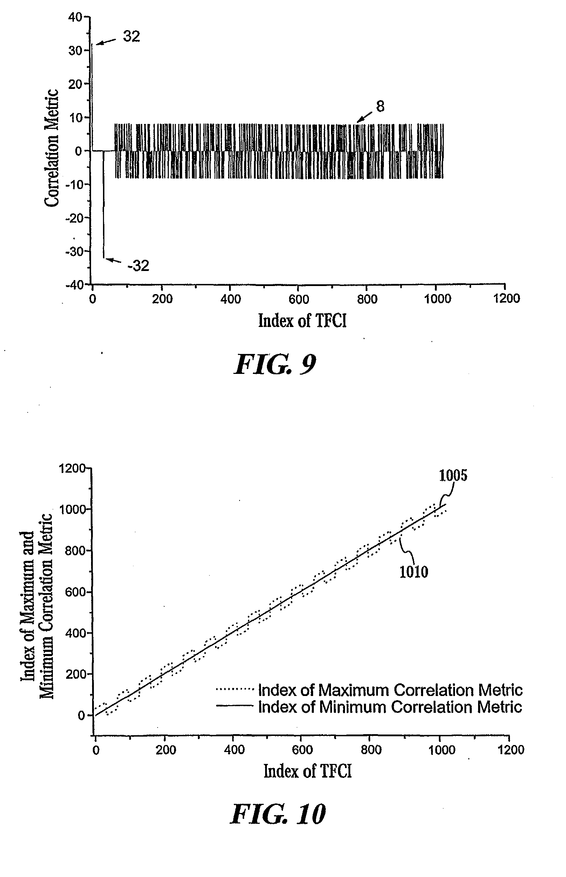

With reference to FIG. 9, the cross correlation property of the TFCI codeword demonstrates that there is a positive peak value and a negative peak value. The positive peak value, which is typically 32 for hard decision, is the auto-correlation value. The negative peak value, which equals to -32 for hard decision, is the cross correlation between the TFCI codeword 110 and a candidate TFCI codeword whose 6th. bit (A5) is a compliment of the 6th. bit (A5) of the TFCI codeword 110. This property is due to the bi-orthogonality of the (32,6) first order Reed-Muller code. Hence, the 6th. bit can be used as a bi-orthogonal state indicator and a correlation-offset value of 32 can be defined.

With reference to FIG. 10, this property of bi-orthogonality is explicitly illustrated. The x-axis (value range from 0 to 1023) represents the 10-bit TFCI data value, the y-axis (value range from 0 to 1023) represents TFCI data corresponding to the positive correlation peak value (index of maximum correlation metric) and negative peak value (index of minimum correlation metric). The straight line 1005 is the 10-bit TFCI source data corresponding to a positive peak value while curve 1010 is the 10-bit TFCI data corresponding to a negative peak value. For instance, when the TFCI data is 1 or (0000000001) in binary form, the maximum correlation metric occurs when the counter value is 1 and the decoder output is 1 or $(0000000001)_{bin}$, which is demonstrated on the straight line 1005; the minimum correlation metric occurs when the counter value is 33 or $(0000100001)_{bin}$, which is demonstrated on the curve 1010.

Based on the above-mentioned property of the TFCI codeword, the decoding procedure can be simplified.

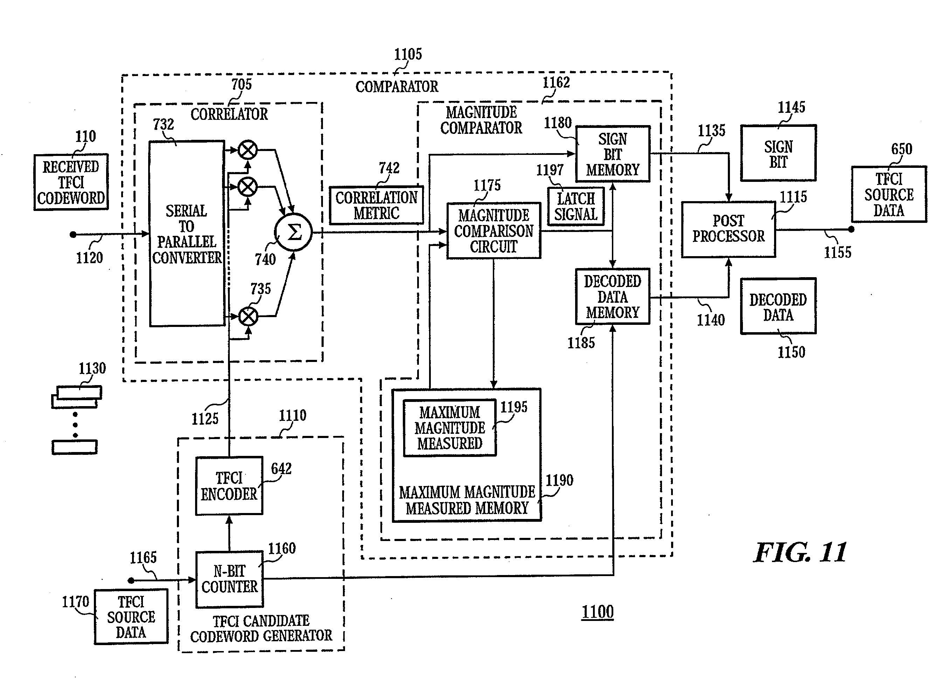

Referring to FIG. 11, a simplified TFCI decoder 1100 comprises a comparator 1105, a TFCI candidate codeword generator 1110, and a post processor 1115. The comparator 1105 has a first input 1120 for receiving the TFCI codeword 110, and a second input 1125 for receiving candidate TFCI codewords 1130 that are output from the TFCI candidate codeword generator 1110. The comparator 1105 has two outputs 1135 and 1140 that provide a sign bit 1145 and decoded data 1150 to the post processor 1115. The post processor 1115 in turn is coupled to provide the TFCI source data 650, which is determined from the sign bit 1145 and the decoded data 1150, to the output 1155 of the decoder 1100.

The TFCI candidate codeword generator 1110 comprises the TFCI encoder 642, described earlier, and an N-Bit counter 1160. The N-Bit counter 1160 is substantially similar to the N-Bit counter 635, described earlier.

The comparator 1105 comprises the correlator 705, which was described earlier, and a magnitude comparator 1162. The correlator 705, as described earlier, has the first input 1120 for receiving the TFCI codeword 110, the second input 1125 for receiving the candidate TFCI codewords 1130, and the correlator 705 provides the correlation metric 742.

The magnitude comparator 1162 comprises a magnitude comparison circuit 1175, a sign bit memory 1180, a decoded data memory 1185, and a maximum magnitude measured memory 1190. The magnitude comparison circuit 1175 compares the magnitude of the current correlation metric 742, received from the correlator 705, with a maximum magnitude measured 1195, that is stored in the maximum magnitude measured memory 1190. When the magnitude of the current correlation metric 742 is greater than the maximum magnitude measured 1195, the magnitude comparison circuit 1175 provides a latch signal 1197 to the sign bit memory 1180 and to the decoded data memory 1185. The decoded data memory 1185 is itself coupled to receive the contents of the N-Bit counter 1160. Upon receiving the latch signal 1197, the sign of the current correlation metric 742 is stored in the sign bit memory 1180, and the current contents of the N-Bit counter 1160 is stored in the decoded data memory 1185, as the decoded data 1150.

The post processor 1115 is coupled to the sign bit memory 1180 and to the decoded data memory 1185 to receive the sign bit 1145 and the decoded data 1150, therefrom. The post processor 1115 is also coupled to an output to provide the TFCI source data 650. When the post processor 1115 determines that the sign bit is 0, it provides the decoded data 1150 as the TFCI source data 650, and when the post processor 1115 determines that the sign bit is 1, it adds 32 to the decoded data 1150, and provides the sum as the TFCI source data 650.

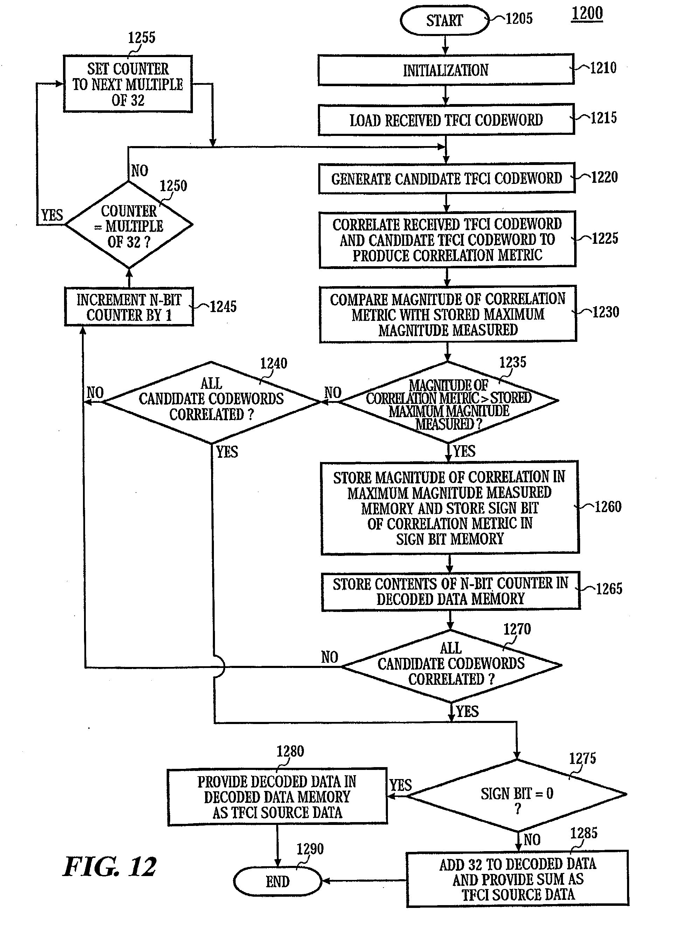

With reference to FIG. 12 the operation 1200 of the TFCI decoder 1100 starts from step 1205 with initialization (step) 1210 of the maximum magnitude measured 1195 and the N-Bit counter 1160 to 0. The TFCI codeword 110 received at the input 1120 is then loaded (step) 1215 into the serial-to-parallel converter 732. Next, in each clock cycle one of the candidate TFCI codewords 1130 is generated (step) 1220. Typically, one clock cycle is equal to one chip period as described earlier, and to generate each candidate TFCI codeword, the contents from the N-Bit counter 1160 is encoded by the TFCI encoder 642 to produce one of the candidate TFCI codewords 1130.

Each 32-bit candidate TFCI codeword 1130 is then correlated (step) 1225 against the received encoded TFCI codeword 110 by the correlator 705 in accordance with the equation provided earlier, and the correlator 705 produces the correlation metric 742. The magnitude comparison circuit 1175 then compares (step) 1230 the magnitude of the correlation metric 742 with the maximum magnitude measured 1195, that is stored in the maximum magnitude measured memory 1190.

When a determination (step) 1235 is made that the magnitude of the correlation metric 742 is less than the maximum magnitude measured 1195, a further determination (step) 1240 is then made as to whether all candidate TFCI codewords 1130 have been correlated. When all the candidate TFCI codewords 1130 have been correlated, the operation 1200 proceeds to step 1275, which will be described later. However, when all the candidate TFCI codewords have not been correlated, the N-Bit counter 1160 is incremented (step) 1245 by 1 count, and count of the N-Bit counter 1160 is checked (step) 1250 to see if the count is equal to a multiple of 32.

When the count is equal to a multiple of 32, the N-Bit counter 1160 is set to the next multiple of 32, the operation 1200 returns to step 1220 and proceeds as described earlier. Alternatively, when the count is not equal to a multiple of 32, the operation 1200 returns to step 1220 directly and proceeds as described earlier. In essence, the N-Bit counter 1160 begins counting from 0, and increases by one in each clock cycle until it reaches 31 and, in the next cycle, the N-Bit counter 1160 jumps to 64 and increases by one count every clock cycle until the counter value equals to 95, so on. That is to say, every other 32 codewords are selected as the candidate TFCI codewords. The total candidate TFCI codewords is 512, and therefore the number of clock cycles required for decoding one received TFCI codeword is halved relative to when all the candidate TFCI codewords are used.

Returning to where the determination (step) 1235 is made, when the magnitude of the correlation metric 742 is greater than the maximum magnitude measured 1195, the magnitude of the correlation metric 742 is stored (step) 1260 in the maximum magnitude measured memory 1190 and becomes the new maximum magnitude measure 1195; and a bit indicative of the sign of the correlation metric 742 is stored (step) 1260 in the sign bit memory 1180 as the sign bit 1145.

Next, the contents of the N-Bit counter 1160 is stored (step) 1265 in the decoded data memory 1185, and a determination (step) 1270 made as to whether all the candidate TFCI codewords 1130 have been correlated. When not all of the candidate TFCI codewords 1130 have been correlated, the N-Bit counter 1160 is incremented (step) 1245 by 1, and the operation 1200 continues as previously described. However, when all of the candidate TFCI codewords 1130 have been correlated, a determination (step) 1275 is made as to whether the sign bit 1145 stored in the sign bit memory 1180 is 0 or 1.

When the sign bit 1145 is 0, the post processor 1115 provides the decoded data 1150 as the TFCI source data 650, and when the post processor 1115 determines that the sign bit 1145 is 1, it adds 32 to the decoded data 1150 and provides the sum as the TFCI source data 650. After performing either of steps 1280 or 1285, the operation 1200 ends (step) 1290. Note that the 6$^{th}$. bit from the least significant bit of the TFCI source data 650, is determined by the sign bit 1145.

When the TFCI list of 1024 elements, which is configured by the radio resource control layer, is not fully utilized, the N-Bit counter 1160 is not automatically increased by one in each clock cycle. Instead, the TFCI candidate codeword generator 1110 is configured by a TFCI table, where only TFCI source data in the TFCI table are encoded and used as candidate TFCI codewords 1130. Hence, the total number of cycles of one decode operation is determined by the number of elements in the TFCI table.

The TFCI table is configured by the RRC layer and passed through medium access control (MAC) layer to control kernel of the physical layer. The TFCI table contains all the possible transport format combinations and their corresponding TFCI values. For one particular configuration, which may last several radio frames, the possible number of TFCI values is much less than 1024, i.e. the TFCI table contains only a small number of the values selected from 0 to 1023. Therefore, the number of candidate codewords is also a small number of the 1024 possibilities. A typical TFCI configuration example is given in 3GPP standard. For a combination of 5 transport channels, the transport formats for each transport channel are:

- transport channel 1 : 3 formats
- transport channel 2 : 2 formats
- transport channel 3 : 2 formats
- transport channel 4 : 5 formats
- transport channel 5 : 2 formats

Total Number of combinations configure for TFCI : 30

The TFCI table conveyed by RRC MAC is provided in TABLE 3 below. Therefore, the TFCI information is selected from 30 values in the TFCI column. At the receiver site, 30 candidate TFCI codewords are generated by the candidate codeword generator 1110 and to decode one TFCI information requires 30 clock cycles in total.

Hence, the present invention, as described, is less complex to realize requiring less hardware resources, which advantageously reduces the complexity of corresponding fabrication processes for producing the TFCI decoder of the present invention.

This is accomplished by generating all possible candidate TFCI codewords from all the possible corresponding TFCI source data, and comparing an unknown received TFCI codeword with each of the candidate TFCI codewords. After all the candidate TFCI codewords have been compared, TFCI source data that resulted in the maximum correlation metric is identified as the decoded TFCI source data. Further, by employing selected candidate TFCI codewords from all the possible candidate TFCI data words, the efficiency of the decoder may be enhanced.

Thus, the present invention, as described provides a method and apparatus for a transport format combination indicator (TFCI) decoder, which overcomes or at least reduces the abovementioned problems of the prior art.

It will be appreciated that although only particular embodiments of the invention have been described in detail, various modifications and improvements can be made by a person skilled in the art without departing from the scope of the present invention.

TABLE 3

| TFCI | TFI-0 | TFI-1 | TFI-2 | TFI-3 | TFI-4 |
|------|-------|-------|-------|-------|-------|
| 0 | 0 | 0 | 0 | 0 | 0 |
| 1 | 1 | 0 | 0 | 0 | 0 |
| 2 | 2 | 1 | 1 | 0 | 0 |
| 3 | 0 | 0 | 0 | 1 | 0 |

TABLE 3   (continued)

| TFCI | TFI-0 | TFI-1 | TFI-2 | TFI-3 | TFI-4 |
|------|-------|-------|-------|-------|-------|
| 4 | 1 | 0 | 0 | 1 | 0 |
| 5 | 2 | 1 | 1 | 1 | 0 |
| 6 | 0 | 0 | 0 | 2 | 0 |
| 7 | 1 | 0 | 0 | 2 | 0 |
| 8 | 2 | 1 | 1 | 2 | 0 |
| 9 | 0 | 0 | 0 | 3 | 0 |
| 10 | 1 | 0 | 0 | 3 | 0 |
| 11 | 2 | 1 | 1 | 3 | 0 |
| 12 | 0 | 0 | 0 | 4 | 0 |
| 13 | 1 | 0 | 0 | 4 | 0 |
| 14 | 2 | 1 | 1 | 4 | 0 |
| 15 | 0 | 0 | 0 | 0 | 1 |
| 16 | 1 | 0 | 0 | 0 | 1 |
| 17 | 2 | 1 | 1 | 0 | 1 |
| 18 | 0 | 0 | 0 | 1 | 1 |
| 19 | 1 | 0 | 0 | 1 | 1 |
| 20 | 2 | 1 | 1 | 1 | 1 |
| 21 | 0 | 0 | 0 | 2 | 1 |
| 22 | 1 | 0 | 0 | 2 | 1 |
| 23 | 2 | 1 | 1 | 2 | 1 |
| 24 | 0 | 0 | 0 | 3 | 1 |
| 25 | 1 | 0 | 0 | 3 | 1 |
| 26 | 2 | 1 | 1 | 3 | 1 |
| 27 | 0 | 0 | 0 | 4 | 1 |
| 28 | 1 | 0 | 0 | 4 | 1 |
| 29 | 2 | 1 | 1 | 4 | 1 |

**Claims**

1. A decoder comprising:

a first input for receiving one of a plurality of encoded codewords, wherein the one of the plurality of encoded codewords corresponds with one of a plurality of source data words in accordance with a predetermined coding scheme;
a second input for receiving a plurality of candidate codewords, wherein the plurality of candidate codewords is generated by encoding the plurality of source data words in accordance with the predetermined coding scheme;
a comparator coupled to the first and second inputs, the comparator for comparing the one of the plurality of encoded codewords with at least some of the plurality of candidate codewords, and the comparator for producing a latch signal when the one of the plurality of encoded codewords is substantially similar to one of the plurality of candidate codewords, wherein the one of the plurality of candidate codewords is produced by the one of the plurality of source data words; and the comparator having an output coupled to provide the latch signal.

**2.** A decoder in accordance with claim 1 further comprising a candidate codeword generator coupled to the second input, the candidate codeword generator for generating the plurality of candidate codewords.

**3.** A decoder in accordance with claim 2, wherein the candidate codeword generator comprises:

a source data word generator for generating each of the plurality of source data words, and for providing each of the plurality of source data words; and

an encoder coupled to the source data word generator, the encoder for receiving the plurality of source data words, the encoder for encoding each of the plurality of source data words in accordance with the predetermined coding scheme to produce the plurality of candidate codewords, and the encoder having an output coupled to the second input for providing the plurality of source data words.

**4.** A decoder in accordance with claim 3 wherein the encoder comprises a transport format combination indicator (TFCI) encoder, the TFCI encoder for receiving each of a plurality of TFCI source data words, for encoding each of the plurality of TFCI source data words in accordance with a predetermined TFCI coding scheme, and for providing a plurality of candidate TFCI codewords.

**5.** A decoder in accordance with claim 4 wherein the source data generator comprises a counter for generating each of the plurality of candidate TFCI codewords.

**6.** A decoder in accordance with claim 5 wherein the counter comprises a sequential counter for providing at least some of the plurality of candidate TFCI codewords in a predetermined sequence.

**7.** A decoder in accordance with claim 6 wherein the counter has a counter-setting input for receiving predetermined TFCI source data, whereupon receiving the predetermined TFCI source data the counter is set in accordance with the predetermined TFCI source data.

**8.** A decoder in accordance with claim 1 wherein the decoder further comprises a data latch having a first input coupled to receive the latch signal and having a second input coupled to receive each of a plurality of source data words from the candidate codeword generator, the data latch for storing one of the plurality of source data words when the one of the plurality of source data words is received contemporaneously with the latch signal.

**9.** A decoder in accordance with claim 8 wherein the comparator comprises a candidate codeword generator for generating and providing the plurality of source data words.

**10.** A decoder in accordance with claim 1 wherein the comparator comprises:

a correlator coupled to receive the one of the plurality of encoded codewords and each of the plurality of candidate codewords, the correlator for correlating the one of the plurality of encoded codewords and the each of the plurality of candidate codewords, and the correlator for providing a correlation metric; and

a metric comparator coupled to the correlator for receiving the correlation metric, and for producing the latch signal from the correlation metric.

**11.** A decoder in accordance with claim 10, wherein the metric comparator comprises a metric comparison circuit having a first input for receiving the correlation metric, and the metric comparison circuit having a second input for receiving a maximum correlation metric measured, and the metric comparison circuit having an output for providing the latch signal when the correlation metric is greater than the maximum correlation metric measured.

**12.** A decoder in accordance with claim 11, wherein the metric comparator comprises a maximum correlation metric measured memory for storing the maximum correlation metric measured, and wherein the second input of the metric comparison circuit is coupled to the maximum correlation metric measured memory.

**13.** A decoder comprising:

a first input for receiving one of a plurality of encoded codewords, wherein the one of the plurality of encoded codewords corresponds with one of a plurality of source data words in accordance with a predetermined coding scheme;

a second input for receiving at least some of a plurality of candidate codewords, wherein the at least some of the plurality of candidate codewords is generated by encoding at least some of the plurality of source data words in accordance with the predetermined coding scheme;

a comparator coupled to the first and second inputs, the comparator for comparing the one of the plurality of encoded codewords with the at least some of the plurality of candidate codewords, and the comparator for producing a sign bit and decoded data;

a post processor coupled to receive the sign bit and the decoded data, and the post processor for producing the one of the plurality of source data words; and

an output coupled to provide the one of the plurality of source data words.

14. A decoder in accordance with claim 13 further comprising a candidate codeword generator coupled to the second input, the candidate codeword generator for generating the at least some of the plurality of candidate codewords.

15. A decoder in accordance with claim 14, wherein the candidate codeword generator comprises:

a source data word generator for generating the at least some of the plurality of source data words, and for providing each of the at least some of the plurality of source data words; and

an encoder coupled to the source data word generator, the encoder for receiving the at least some of the plurality of source data words, the encoder for encoding each of the at least some of the plurality of source data words in accordance with the predetermined coding scheme to produce the at least some of the plurality of candidate codewords, and the encoder having an output coupled to the second input for providing the at least some of the plurality of source data words.

16. A decoder in accordance with claim 15 wherein the encoder comprises a transport format combination indicator (TFCI) encoder, the TFCI encoder for receiving at least some of a plurality of TFCI source data words, for encoding each of the at least some of the plurality of TFCI source data words in accordance with a predetermined TFCI coding scheme, and for providing at least some of the plurality of candidate TFCI codewords.

17. A decoder in accordance with claim 15 wherein the source data word generator comprises a counter for generating at least some of the plurality of candidate TFCI codewords.

18. A decoder in accordance with claim 17 wherein the counter comprises a sequential counter for providing at least some of the plurality of candidate TFCI codewords in a predetermined sequence.

19. A decoder in accordance with claim 17 wherein the counter has a counter-setting input for receiving predetermined TFCI source data, whereupon receiving the predetermined TFCI source data the counter is set in accordance with the predetermined TFCI source data.

20. A decoder in accordance with claim 15 wherein the comparator comprises:

a correlator coupled to receive the one of the plurality of encoded codewords and at least some of the plurality of candidate codewords, the correlator for correlating the one of the plurality of encoded codewords and each of the at least some of the plurality of candidate codewords, and the correlator for providing a correlation metric; and

a magnitude comparator coupled to the correlator for receiving the correlation metric, and for producing the sign bit and the decoded data.

21. A decoder in accordance with claim 20 wherein the magnitude comparator comprises:

a magnitude comparison circuit having a first input for receiving the correlation metric, the magnitude comparison circuit having a second input for receiving a maximum magnitude measured, and the magnitude comparison circuit having an output for providing a latch signal when the magnitude of the correlation metric is greater than the maximum magnitude measured; and

a decoded data memory coupled to receive the at least some of the plurality of source data words and having an input for receiving the latch signal, the decoded data memory for storing one of the at least some of the plurality of source data words as the decoded data when the latch signal is received, and the decoded data memory having an output for providing the decoded data.

22. A decoder in accordance with claim 21 wherein the magnitude comparator further comprises:

a sign bit memory coupled to receive the correlation metric and the latch signal, the sign bit memory for storing the sign bit of the correlation metric therein when the magnitude of the correlation metric is greater than the maximum magnitude measured, and the sign bit memory having an output for providing the sign bit.

23. A method for decoding comprising the steps of:

a) receiving one of a plurality of encoded codewords, wherein the one of the plurality of encoded codewords corresponds with one of a plurality of source data words in accordance with a predetermined coding scheme;
b) generating a plurality of candidate codewords, wherein the plurality of candidate codewords is generated by encoding each of the plurality of source data words in accordance with the predetermined coding scheme;
c) comparing the one of the plurality of encoded codewords with each of the plurality of candidate codewords to determine a measure of similarity therebetween;
d) determining one of the plurality of candidate codewords has the greatest measure of similarity;
e) identifying the corresponding one of the plurality of source data words that produced the one of the plurality of candidate codewords in accordance with the predetermined coding scheme; and
f) providing the one of the plurality of source data words.

24. A method in accordance with claim 23, wherein step (a) comprises the step of receiving one of a plurality of encoded TFCI codewords, wherein the one of the plurality of encoded TFCI codewords corresponds with one of a plurality of TFCI source data words in accordance with a predetermined coding scheme.

25. A method in accordance with claim 24, wherein step (b) comprises the steps of:

generating each of the plurality of TFCI source data words; and
encoding each of the plurality of TFCI source data words in accordance with the predetermined coding scheme to produce a plurality of candidate TFCI codewords.

26. A method in accordance with claim 25, wherein step (c) comprises the step correlating the one of the plurality of encoded TFCI codewords with each of the plurality of candidate TFCI codewords to determine a corresponding plurality of correlation metrics associated with each of the plurality of candidate TFCI codewords.

27. A method in accordance with claim 26, wherein step (d) comprises the step determining one of the plurality of correlation metrics associated with one of the plurality of candidate TFCI codewords indicates the greatest measure of correlation.

28. A method in accordance with claim 27, wherein step (e) comprises the step of identifying the one of the plurality of TFCI source data words that produced the one of the plurality of candidate TFCI codewords, wherein the one of the plurality of candidate TFCI codewords is associated with the one of the plurality of correlation metrics indicating the greatest measure of correlation.

29. A method in accordance with claim 28, wherein step (f) comprises the step of providing the one of the plurality of TFCI source data words.

30. A method for decoding where a bi-orthogonal coding scheme is employed, the method comprising the steps of:

a) receiving one of a plurality of encoded codewords, wherein the one of the plurality of encoded codewords corresponds with one of a plurality of source data words in accordance with a predetermined coding scheme;
b) generating a plurality of candidate codewords, wherein the plurality of candidate codewords is generated by encoding at least some of a plurality of data words in accordance with the predetermined coding scheme;
c) comparing the one of the plurality of encoded codewords with the at least some of the plurality of candidate codewords to determine a measure of similarity therebetween, wherein the measure of similarity includes a bi-orthogonal state indicator;
d) determining one of the at least some of the plurality of candidate codewords has the greatest measure of similarity;
e) identifying the corresponding one of the plurality of data words that produced the one of the plurality of candidate codewords in accordance with the predetermined coding scheme;
f) determining the state of the bi-orthogonal state indicator;
g) when the bi-orthogonal state indicator has a first state, the corresponding one of the plurality of data words is provided as the one of the plurality of source data words; and

f) when the bi-orthogonal state indicator has a second state, a correlation offset value is added to the corresponding one of the plurality of data words, and the sum is provided as the one of the plurality of source data words.

**31.** A method in accordance with claim 30, wherein step (a) comprises the step of receiving one of a plurality of encoded TFCI codewords, wherein the one of the plurality of encoded TFCI codewords corresponds with one of a plurality of TFCI source data words in accordance with a predetermined coding scheme.

**32.** A method in accordance with claim 31, wherein step (b) comprises the steps of:

generating at least some of the plurality of data words; and
encoding each of the plurality of data words in accordance with the predetermined coding scheme to produce a plurality of candidate TFCI codewords.

**33.** A method in accordance with claim 31, wherein step (b) comprises the steps of:

receiving at least some of the plurality of data words; and
encoding each of the plurality of data words in accordance with the predetermined coding scheme to produce a plurality of candidate TFCI codewords.

**34.** A method in accordance with claim 32, wherein step (c) comprises the step correlating the one of the plurality of encoded TFCI codewords with each of the plurality of candidate TFCI codewords to determine a corresponding plurality of correlation metrics associated with each of the plurality of candidate TFCI codewords.

**35.** A method in accordance with claim 34, wherein step (d) comprises the step determining one of the plurality of correlation metrics associated with one of the plurality of candidate TFCI codewords indicates the greatest measure of correlation.

**36.** A method in accordance with claim 35, wherein step (e) comprises the step of identifying the one of the plurality of data words that produced the one of the plurality of candidate TFCI codewords, wherein the one of the plurality of candidate TFCI codewords is associated with the one of the plurality of correlation metrics indicating the greatest measure of correlation.

**37.** A method in accordance with claim 36, wherein step (f) comprises the step of using the one of the plurality of data words and the state of the bi-orthogonal state indicator to determine the one of the plurality of TFCI source data words.

| DPDCH | DPCCH | | DPDCH | DPCCH |
|---|---|---|---|---|
| DATA1 $N_{data1}$ BITS | TPC $N_{TPC}$ BITS | TFCI $N_{TFCI}$ BITS | DATA2 $N_{data2}$ BITS | PILOT $N_{pilot}$ BITS |

$T_{slot}$ = 2560 CHIPS, $10*2^k$ BITS (k = 0..7)

| SLOT#0 | SLOT#1 | | SLOT#i | | SLOT#14 |
|---|---|---|---|---|---|

ONE RADIO FRAME, $T_f$ = 10 ms

A. FRAME STRUCTURE OF DOWNLINK

DATA

| DATA $N_{data}$ BITS |
|---|

CONTROL

| PILOT $N_{pilot}$ BITS | TFCI $N_{TFCI}$ BITS | FBI $N_{FBI}$ BITS | TPC $N_{TPC}$ BITS |
|---|---|---|---|

$T_{slot}$ = 2560 CHIPS, $10*2^k$ BITS (k = 0..7)

| SLOT#0 | SLOT#1 | | SLOT#i | | SLOT#14 |
|---|---|---|---|---|---|

ONE RADIO FRAME, $T_f$ = 10 ms

B. FRAME STRUCTURE OF UPLINK

# FIG. 1 (PRIOR ART)

16

**FIG. 2 (PRIOR ART)**

*FIG. 3 (PRIOR ART)*

*FIG. 4 (PRIOR ART)*

Stage 1 | Stage 2 | Stage 3 | Stage 4

| | | | |
|---|---|---|---|
| r1 | r1+r2 | (r1+r2)+(r3+r4) | ((r1+r2)+(r3+r4))+((r5+r6)+(r7+r8)) | (((r1+r2)+(r3+r4))+((r5+r6)+(r7+r8)))+(((r9+r10)+(r11+r12))+((r13+r14)+(r15+r16))) |
| r2 | r1-r2 | (r1+r2)-(r3+r4) | ((r1+r2)+(r3+r4))-((r5+r6)+(r7+r8)) | (((r1+r2)+(r3+r4))+((r5+r6)+(r7+r8)))-(((r9+r10)+(r11+r12))+((r13+r14)+(r15+r16))) |
| r3 | r3+r4 | (r1+r2)+(r3+r4) | ((r1+r2)-(r3+r4))+((r5+r6)-(r7+r8)) | (((r1+r2)-(r3+r4))+((r5+r6)-(r7+r8)))+(((r9+r10)-(r11+r12))+((r13+r14)-(r15+r16))) |
| r4 | r3-r4 | (r1+r2)-(r3+r4) | ((r1+r2)-(r3+r4))-((r5+r6)-(r7+r8)) | (((r1+r2)-(r3+r4))+((r5+r6)-(r7+r8)))-(((r9+r10)-(r11+r12))+((r13+r14)-(r15+r16))) |
| r5 | r5+r6 | (r5+r6)+(r7+r8) | ((r1+r2)+(r3+r4))+((r5+r6)+(r7+r8)) | (((r1+r2)+(r3+r4))-((r5+r6)+(r7+r8)))+(((r9+r10)+(r11+r12))-((r13+r14)+(r15+r16))) |
| r6 | r5-r6 | (r5+r6)+(r7+r8) | ((r1+r2)+(r3+r4))-((r5+r6)+(r7+r8)) | (((r1+r2)+(r3+r4))-((r5+r6)+(r7+r8)))-(((r9+r10)+(r11+r12))-((r13+r14)+(r15+r16))) |
| r7 | r7+r8 | (r5+r6)-(r7+r8) | ((r1+r2)-(r3+r4))+((r5+r6)-(r7+r8)) | (((r1+r2)-(r3+r4))-((r5+r6)-(r7+r8)))+(((r9+r10)-(r11+r12))-((r13+r14)-(r15+r16))) |
| r8 | r7-r8 | (r5+r6)-(r7+r8) | ((r1+r2)-(r3+r4))-((r5+r6)-(r7+r8)) | (((r1+r2)-(r3+r4))-((r5+r6)-(r7+r8)))-(((r9+r10)-(r11+r12))-((r13+r14)-(r15+r16))) |
| r9 | r9+r10 | (r9+r10)+(r11+r12) | ((r9+r10)+(r11+r12))+((r13+r14)+(r15+r16)) | (((r1+r2)+(r3+r4))+((r5+r6)+(r7+r8)))+(((r9+r10)+(r11+r12))+((r13+r14)+(r15+r16))) |
| r10 | r9-r10 | (r9+r10)+(r11+r12) | ((r9+r10)+(r11+r12))+((r13+r14)+(r15+r16)) | (((r1+r2)+(r3+r4))+((r5+r6)+(r7+r8)))-(((r9+r10)+(r11+r12))+((r13+r14)+(r15+r16))) |
| r11 | r11+r12 | (r9+r10)-(r11+r12) | ((r9+r10)-(r11+r12))+((r13+r14)-(r15+r16)) | (((r1+r2)-(r3+r4))+((r5+r6)-(r7+r8)))+(((r9+r10)-(r11+r12))+((r13+r14)-(r15+r16))) |
| r12 | r11-r12 | (r9+r10)-(r11+r12) | ((r9+r10)-(r11+r12))+((r13+r14)-(r15+r16)) | (((r1+r2)-(r3+r4))+((r5+r6)-(r7+r8)))-(((r9+r10)-(r11+r12))+((r13+r14)-(r15+r16))) |
| r13 | r13+r14 | (r13+r14)+(r15+r16) | ((r9+r10)+(r11+r12))-((r13+r14)+(r15+r16)) | (((r1+r2)+(r3+r4))-((r5+r6)+(r7+r8)))+(((r9+r10)+(r11+r12))-((r13+r14)+(r15+r16))) |
| r14 | r13-r14 | (r13+r14)+(r15+r16) | ((r9+r10)+(r11+r12))-((r13+r14)+(r15+r16)) | (((r1+r2)+(r3+r4))-((r5+r6)+(r7+r8)))-(((r9+r10)+(r11+r12))-((r13+r14)+(r15+r16))) |
| r15 | r15+r16 | (r13+r14)-(r15+r16) | ((r9+r10)-(r11+r12))-((r13+r14)-(r15+r16)) | (((r1+r2)-(r3+r4))-((r5+r6)-(r7+r8)))+(((r9+r10)-(r11+r12))-((r13+r14)-(r15+r16))) |
| r16 | r15-r16 | (r13+r14)-(r15+r16) | ((r9+r10)-(r11+r12))-((r13+r14)-(r15+r16)) | (((r1+r2)-(r3+r4))-((r5+r6)-(r7+r8)))-(((r9+r10)-(r11+r12))-((r13+r14)-(r15+r16))) |

© Samsung Electronics Co., Ltd. 2000

## FIG. 5 (PRIOR ART)

110 — RECEIVED TFCI CODEWORD

610

605 — COMPARATOR

630

620 — LATCH SIGNAL

645

647

625 — TFCI ENCODER

642

640 — TFCI SOURCE DATA

650

636

665

670 — TFCI SOURCE DATA

635 — N-BIT COUNTER

TFCI CANDIDATE CODEWORD GENERATOR

600

## FIG. 6

FIG. 7

EP 1 422 859 A2

<u>800</u>

START ~805

INITIALIZATION ~810

LOAD RECEIVED TFCI CODEWORD ~815

GENERATE CANDIDATE TFCI CODEWORD ~820

INCREMENT N-BIT COUNTER BY 1 ~850

CORRELATE RECEIVED TFCI CODEWORD AND CANDIDATE TFCI CODEWORD TO PRODUCE CORRELATION METRIC ~825

COMPARE CORRELATION METRIC WITH STORED MAXIMUM CORRELATION METRIC ~830

837
ALL CANDIDATE CODEWORDS CORRELATED ?

NO

835
CORRELATION METRIC > STORED MAXIMUM CORRELATION METRIC ?

NO

YES

YES

STORE CORRELATION METRIC IN MAXIMUM CORRELATION METRIC MEMORY ~840

STORE CONTENTS OF N-BIT COUNTER IN DATA LATCH ~845

855
ALL CANDIDATE CODEWORDS CORRELATED ?

NO

YES

DATA LATCH CONTAINS DECODED TFCI SOURCE DATA ~860

END ~865

*FIG. 8*

FIG. 9

FIG. 10

FIG. 11

EP 1 422 859 A2

*1200*

START —1205

INITIALIZATION —1210

SET COUNTER
TO NEXT MULTIPLE
OF 32
*1255*

LOAD RECEIVED TFCI CODEWORD —1215

NO

*1250*
COUNTER
= MULTIPLE
OF 32 ?

YES

GENERATE CANDIDATE TFCI CODEWORD —1220

CORRELATE RECEIVED TFCI CODEWORD
AND CANDIDATE TFCI CODEWORD TO
PRODUCE CORRELATION METRIC
—1225

INCREMENT N-BIT
COUNTER BY 1 —1245

COMPARE MAGNITUDE OF CORRELATION
METRIC WITH STORED MAXIMUM
MAGNITUDE MEASURED
—1230

*1240*
ALL
CANDIDATE CODEWORDS
CORRELATED ?
NO

NO
*1235*
MAGNITUDE OF
CORRELATION METRIC > STORED
MAXIMUM MAGNITUDE
MEASURED ?

YES

YES

STORE MAGNITUDE OF CORRELATION IN
MAXIMUM MAGNITUDE MEASURED
MEMORY AND STORE SIGN BIT
OF CORRELATION METRIC IN
SIGN BIT MEMORY
—1260

STORE CONTENTS OF N-BIT COUNTER IN
DECODED DATA MEMORY —1265

NO
*1270*
ALL
CANDIDATE CODEWORDS
CORRELATED ?

YES

*1280*
PROVIDE DECODED DATA IN
DECODED DATA MEMORY
AS TFCI SOURCE DATA

YES
*1275*
SIGN BIT = 0
?

NO *1285*

*1290*

**FIG. 12**

END

ADD 32 TO DECODED DATA
AND PROVIDE SUM AS
TFCI SOURCE DATA